# EUROPEAN PATENT APPLICATION

(11) **EP 1 722 363 A1**
(43) Date of publication of application: **15.11.2006**
(21) Application number: 05719713.9
(22) Date of filing: 01.03.2005
(51) Int. Cl.: G11B 20/10, G11B 20/12, G11B 27/00, G06F 12/14

(54) **INFORMATION RECORDING MEDIUM AND INFORMATION PROCESSING DEVICE**

(30) Priority: 01.03.2004 JP 2004055953
(71) Applicant: MATSUSHITA ELECTRIC INDUSTRIAL CO., LTD., Kadoma-shi, Osaka 571-8501 (JP)
(72) Inventor: HORII, Noriaki c/o Matsushita El Ind Co, Ltd, Chuo-ku, Osaka-shi, Osaka 540-6319 (JP); SHIMBO, Masatoshi c/o Matsushita El Ind Co, Ltd, Chuo-ku, Osaka-shi, Osaka 540-6319 (JP); MORI, Yoshihiro c/o Matsushita El Ind Co, Ltd, Chuo-ku, Osaka-shi, Osaka 540-6319 (JP)
(74) Representative: Balsters, Robert
(86) International application number: PCT/JP2005/003396
(87) International publication number: WO 2005/083703

(57) **Abstract**

The present invention makes it possible to perform copy control so that the available number of copy times of the data indicating the same contents is invariable irrespective of the type of playback apparatus.

An information recording apparatus in the present invention has at least two recording areas. The first recording area includes: first content information; first management information; and first copyright-related information. The second recording area includes: second contents; and second management information including second copyright-related information. The respective first content information and second content information are the same in contents but different in attributes. The second management information includes: link information indicating the relationship between the first content information and the second content information; and a copyright-compliant flag. This copyright-compliant flag indicates whether or not the copyright restriction indicated by the second copyright-related information matches the copyright restriction indicated by the first copyright-related information which are linked to each other.

## Description

### Technical Field

The present invention relates to an information recording medium and an information processing apparatus which can play back and record contents on the information recording medium. The present invention especially relates to a technique for performing copy control of plural audio contents which are related to each other and recorded in the recording areas of an information recording medium.

### Background Art

In these days, information recording media with a large capacity represented by a DVD disc have been developed. The recordable data capacity of a CD was conventionally 650 MB. However, in the case of a DVD, it is possible to record 4.7 GB data on the one side of a DVD. Today, information recording media with a higher density in which a blue laser is employed have also been developed. As the result, various contents can be recorded on a single information recording medium. For example, a CD is capable of recording music contents of 44.1 kHz, 16 bits and two-channel for about 74 minutes, and a DVD-Audio is capable of recording contents of, for example, (a) up to 192 kHz, 24 bits and two-channel and (b) up to 96 kHz, 24 bits and six-channel, for approximately the same duration as 74 minutes. In addition, such an DVD-Audio is capable of recording music contents of 44.1 kHz, 16 bits and two-channel, six times longer than a CD (for example, refer to Non-patent Reference 1).

On the other hand, various kinds of irreversible audio compression recording schemes represented by "mp3" have been developed recently. Some audio contents are recorded by means of such schemes. In an example case of recording a 5-minute tune of 128 kbps in a form of mp3, the data amount is about 5 MB. Since a CD is required to have data capacity of about 50 MB in order to record the 5-minute tune (44.1 kHz, 16 bits and two-channel), mp3 makes it possible to save a nine-tenth of data amount.

In addition, contents recorded on an information recording medium have been encrypted in order not to be copied illegally. For example, music contents recorded on a DVD-Audio have been encrypted using an encryption technique called CPPM (Content Protection for Prerecorded Media).

Further, copyright management information related to the encrypted music contents has been recorded on the information recording medium, and the copy control of the encrypted music contents can be performed based on the copyright management information. Here, it is assumed that (a) copyright management information of some contents, (b) the information which permits each recording medium to copy the contents n times, and further, (c) unique information which uniquely identifies music, which is for example ISRC (International Standard Recording Code) are recorded on the information recording medium. In this case, the contents have been copied in a recording apparatus once, the unique information of the copied music contents and the copy count are recorded in its built-in memory. Further, when the same music contents are copied in the same recording apparatus, the copy count and the unique information recorded in the built-in memory are checked and copy control of the contents is performed so that the contents cannot be copied exceeding the available number of copy times.

Further, userfriendliness such as low power consumption or high speed copying can be improved by recording audio data of music contents with different attributes on a single information recording medium. A case in point is the case of recording both the audio data of music contents recorded in a form of linear PCM and the audio data compressed by a compression recording scheme such as mp3. In this case, the following userfriendliness is provided: audio data in a form of linear PCM is used for the purpose of playback, and audio data of mp3 is used for the purpose of high speed copying. This enables a user to enjoy the music contents by playing back the contents with high quality at home and by playing back the copied compressed audio data using a portable device (playback apparatus). In the case where copyright management information of each audio data is recorded, playback control, copy control and the like are also performed based on the copyright management information.
Non-patent reference 1: DVD Specifications for Read-only Disc Part 4 AUDIO SPECIFICATIONS Version. 1.2

### Disclosure of Invention

### Problems that Invention is to Solve

By the way, in the case of dealing an information recording medium which is compliant to plural different recording schemes, it is assumed that the information recording medium is divided into a first recording area and a second recording area, and the respective contents with different attributes are recorded in the corresponding recording areas by means of the different recording schemes. Here, as an example, it is assumed that contents to be recorded on the information recording medium are audio data.

With the structure like this, it becomes possible to deal an information recording medium which is compliant to the recording schemes by means that a playback apparatus which is capable of decrypting the recording scheme of the audio data recorded in the first recording area plays back the audio data in the first recording area and a playback apparatus which is capable of decrypting the recording scheme of the audio data recorded in the second recording area plays back the audio data in the second recording area. In the case of assuming that the data to be recorded on the recording medium is audio data, for example, it is also assumed that the first audio data in a form of linear PCM is recorded in the first recording area and the second audio data of the same contents in a form of mp3 is recorded on the second recording media. In this case, management information for managing the handling of the recorded audio data and copyright management information are recorded in each of the recording areas. Various kinds of playback apparatuses are conceivable as a playback apparatus for playing back such an information recording medium. More specifically, conceivable playback apparatuses are: a playback apparatus intended for decrypting the audio data in the first recording area only; a playback apparatus intended for decrypting the audio data in the second recording area only; and a playback apparatus intended for decrypting the audio data both in the first recording area and in the second recording area.

Here will be provided a consideration as to copying of audio data whose copyright management information indicates that the available number of copy times is three. In this case, the first audio data is read out using the playback apparatus intended for decrypting the first area only, and the first audio data can be copied three times by a recording apparatus. Likewise, in the case where the second audio data is read out using a playback apparatus intended for decrypting the second recording area only, the second audio data can be copied only three times.

However, in the case of outputting the audio data using a playback apparatus which is capable of decrypting both the recording areas and copying the outputted audio data using a recording apparatus, the first audio data can be copied three times and the second audio data can also be copied three times, and thus the data can be copied six times in total. As the result, the available number of copy times varies depending on the performance of playback apparatus which decrypts the recording areas. This is not intended by the content provider, and provides unfair conditions to users resulting in causing disorders.

In addition, in the case where the available number of copy times of the first audio data is different from that of the second audio data, the available number of copy times by a playback apparatus which is capable of reading out and outputting both the data varies depending on the audio data to be outputted for copying.

The present invention has been conceived in order to solve the above-described problems. An object of the present invention is to provide an information recording medium which makes it possible to provide a fair copyright-related restriction such as the available number of copy times of the data in the information recording medium itself and information processing apparatus which is capable of realizing such an information recording medium.

### Means to Solve the Problems

The information recording medium concerning the present invention solves the above-described problems. The above-described object is achieved with the following information recording medium concerning the present invention. It has a first recording area and a second recording area. The followings are recorded in the first recording area of the medium: first content information; first management information concerning the handling of the first content information; and first copyright-related information for placing a copyright restriction on the first content information, and the followings are recorded in the second recording area: second content information; and second management information including second copyright-related information for placing a copyright restriction on the second content information. The respective first content information and second content information are the same in contents but different in attributes. The second management information includes: link information indicating a relationship between the first content information and the second content information; and a copyright-compliant flag. The copyright-compliant flag indicates whether or not the copyright restriction indicated by the second copyright-related information matches the copyright restriction indicated by the first copyright-related information of the first content information which is linked to the second content information by the link information.

In addition, the above-described object is achieved with the following information processing apparatus, concerning the present invention, for recording or playing back an information recording medium having a first recording area and a second recording area. The followings are recorded in the first recording area: first content information; first management information concerning the handling of the first content information; and first copyright-related information for placing a copyright restriction on the first content information, and the followings are recorded in the second recording area: second content information; and second management information including second copyright-related information for placing a copyright restriction on the second content information. The respective first content information and second content information are the same in contents but different in attributes. The second management information includes: link information indicating a relationship between the first content information and the second content information; and a copyright-compliant flag. The copyright-compliant flag indicates whether or not (a) a copyright restriction indicated by the second copyright-related information matches (b) a copyright restriction indicated by the first copyright-related information of the first content information which is linked to the second content information by the link information. The information processing apparatus includes: a reading-out unit which reads out information of the information recording medium; and an information processing unit which processes the information read out by the reading-out unit. The information processing unit outputs the second content information according to first copyright-related information, in the case where the copyright-compliant flag indicates that (a) recording and playback restrictions indicated by the second copyright-related information match (b) recording and playback restrictions indicated by the first copyright-related information of the first content information which is linked to the second content information by the link information.

Note that the present invention can be realized as a license information management method including steps corresponding to those characteristic components in the above-described information processing apparatus, and also as a program causing a personal computer or the like to execute these steps. In addition, the program can be widely distributed through a recording medium such as a DVD or a communication medium such as the Internet.

### Effects of the Invention

With the present invention, it becomes possible to control the available number of copy times at the time when the data to be outputted from playback apparatuses are copied by recording apparatuses so that the available number of copy times is invariable irrespective of the type of playback apparatus, even in the case where contents with different attributes and the pieces of copyright management information related to the respective data are recorded on an information recording medium.

### Brief Description of Drawings

FIG. 1A is a diagram showing the logical structure of an information recording medium. FIG. 1B is a diagram showing the logical structure of the information recording medium.
FIG. 2 is a diagram showing the file structure of the information recoding medium.
FIG. 3A is a diagram showing the position at which first copyright management information is recorded. FIG. 3B is a diagram showing the position at which second copyright management information is recorded.
FIG. 4 is a flow chart showing the flow of the processing performed by the recording apparatus.
FIG. 5 is a flow chart showing the flow of the processing performed in the case where the second audio data is copied using a copyright-compliant flag.

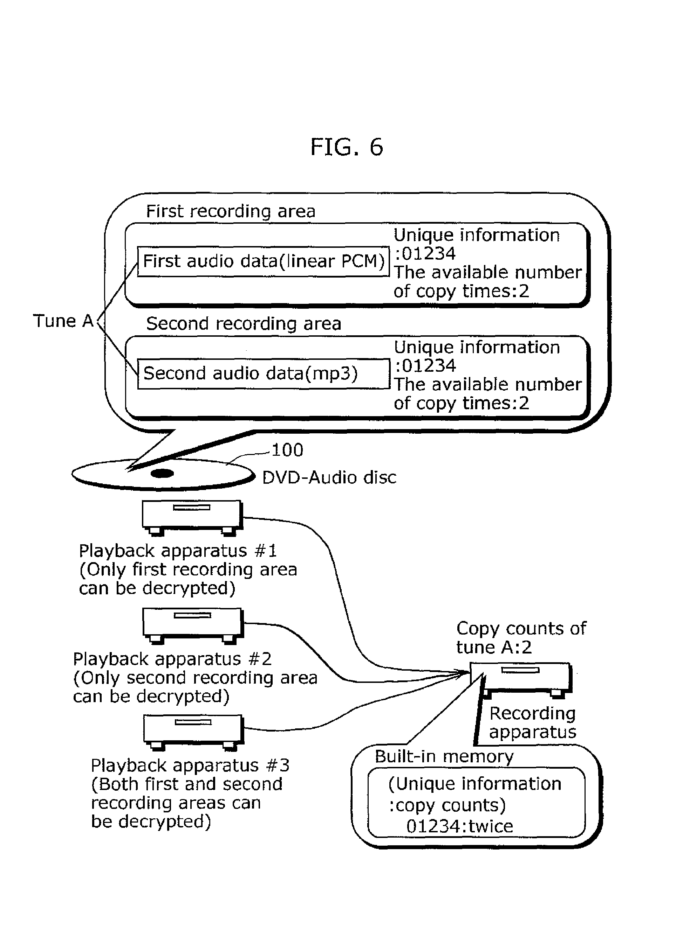

FIG. 6 is a diagram showing an example concept of copying.
FIG. 7 is a diagram showing another example concept of copying.
FIG. 8 is a diagram showing a link example.
FIG. 9 is a diagram showing the data structure of a second management information file.
FIG. 10 is a block diagram showing the functional structure of the recording apparatus.
FIG. 11 is a flow chart indicating the recording processing of group link information on the group link information table.
FIG. 12 is a flow chart indicating the processing of determining copyright-related information.
FIG. 13 is a block diagram showing the functional structure of the playback apparatus.
FIG. 14 is a flow chart indicating the processing of determining the audio data to be copied.

### Numerical References

- 100: information recording medium (DVD Audio Disc)
- 110: read-in area
- 120: volume area
- 121: volume file management area
- 122: DVD Audio Zone
- 123: DVD Video Zone
- 124: Compressed Audio Zone
- 130: read-out area
- 902: recording apparatus
- 903: management-related information input unit
- 904: copyright-related information input unit
- 905: content input unit
- 906: recording unit
- 907: stream data generation unit
- 908: management information generation unit
- 909: first management information generation unit
- 910: first copyright-related information recording unit
- 911: second copyright-related information determination unit
- 912: second management information generation unit
- 1110: playback apparatus
- 1111: information recording medium
- 1112: reading-out unit
- 1113: data extraction unit
- 1114: content output unit
- 1115: copyright-related information output unit
- 1116: management information decryption unit
- 1117: first management information decryption unit
- 1118: second management information decryption unit
- 1119: copyright comparison unit
- 1120: instruction input unit

### Best Mode for Carrying Out the Invention

Embodiments of the present invention will be described in detail with reference to figures. The present invention will be described using the following embodiments and attached figures. However, it should be noted that these embodiments and figures will be provided for the purpose of illustration, and thus there is no intention to limit the present invention by them.

### (First Embodiment)

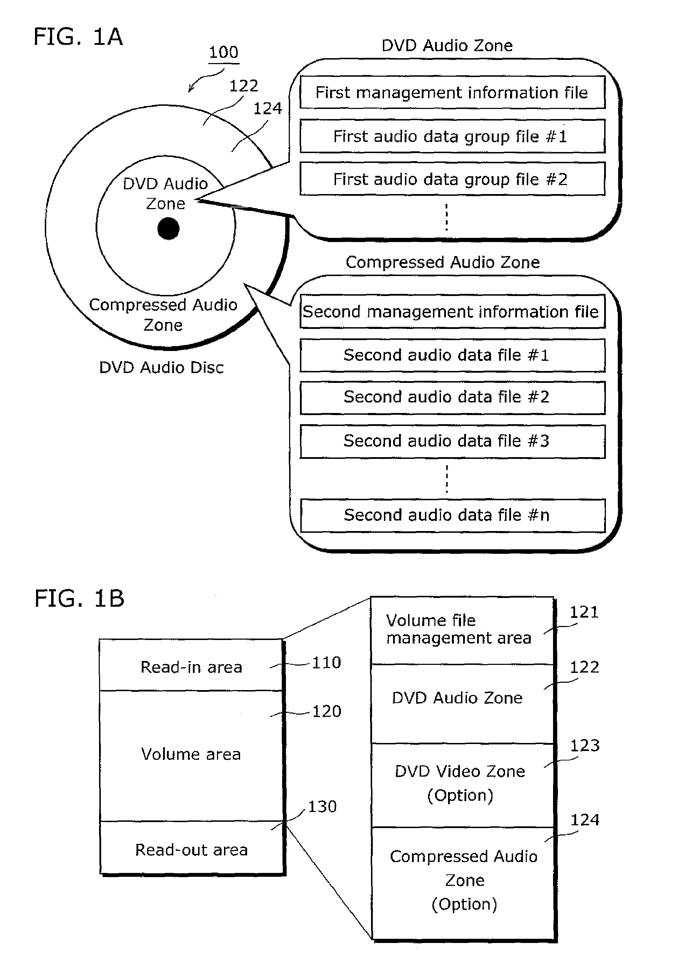

The present invention is characteristic in that the information recording medium is divided into plural recording areas, and in the respective recording areas, management information, contents such as music data and copyright management information are stored. FIG. 1A is an illustration of the logical structure of a DVD Audio Disc 100 which is an example of the information recording medium 100 concerning the present invention.

In addition, as shown in FIG. 1B, the areas of the information recording medium 100 (hereinafter referred to as "DVD Audio disc") include: a read-in area 110; a volume area 120; and a read-out area 130. These areas are arranged in the direction from the inner radius to the outer radius of the information recording medium 100. These areas can be identified based on identification information included in the sector addresses of the physical sectors. The physical sectors are arranged in the ascending order of sector addresses.

The read-in area 110 stores, for example, data for stabilizing the operation of the playback apparatus at the time of starting read-out.

The read-out area 130 is used for notifying an end of playback to the playback apparatus. Note that the read-out area 130 does not store any data with meaning.

The volume area 120 stores digital data corresponding to the application. The physical sectors included in the volume area 120 are managed as logical blocks. It becomes possible to identify the logical blocks by assigning Number 0 to the leading physical sector of the volume area 120 and serial numbers (logical block numbers) to the respectively corresponding physical sectors which follow the physical sector with number 0.

As shown in FIG. 1B, the volume area 120 includes: a volume file management area 121; a DVD Audio Zone 122; and a DVD Video Zone 123. Note that the DVD Video Zone 123 and the DVD Audio Zone 124 are options, and thus they are not necessary (Note that there is a Compressed Audio Zone 124 which is a second recording area in this embodiment).

The data of the volume file management area 121 is recorded in a format (ISO/IEC 13346) which can be decrypted by any one of the apparatus which is capable of decrypting the DVD Audio Zone 122 and the apparatus which is capable of decrypting the Compressed Audio Zone 124. Note that it is assumed that the DVD Audio Zone 122 and the Compressed Audio Zone 124 respectively store the same tune (for example, tune A), but the formats of the same tune vary depending on the zones. Further, the volume file management area 121 stores file system management information for managing plural logical blocks which are files according to ISO/IEC 13346.

Here, the file system management information shows association between the names of the respective files and the address in the group of logical blocks which is occupied by the respective files. The playback apparatus accesses the information recording medium on a file-by-file basis based on the file system management information. More specifically, the playback apparatus obtains the address, in the group of logical blocks, which corresponds to the given file name, and then accesses the group of logical blocks based on this address. In this way, the digital data of a desired file can be read out.

As shown in FIG. 1B, the playback apparatus is capable of playing back the audio data recorded in the DVD Audio Zone 122 which is the first recording area. The playback apparatus reads the file system management information of the volume file management area 121 in reading out the data from the information recording medium 100 and obtains the information of the storage position (address) of the first management information file. After that, it becomes possible for the playback apparatus to access the first management information file and access the audio data of the audio data group according to the contents of this first management information file. On the other hand, a playback apparatus, being not capable of playing back the audio data with a different format recorded in the first recording area, cannot decrypt the contents of the first management information file. Thus it cannot play back the audio data recorded in the first recording area.

In addition, a playback apparatus, being capable of playing back the audio data recorded in the Compressed Audio Zone 124 which is the second recording area, reads the file system management information in the volume file management area 121 and obtains the information in the storage position (address) of the second management information file. After that it becomes possible for the playback apparatus to access the second management information file and to get the audio data therein according to the details of this second management information file. On the other hand, a playback apparatus, being not capable of playing back the audio data recorded in the second recording area, cannot decrypt the details of the second management information file because the format of the audio data is different from the one which can be handled by the apparatus.

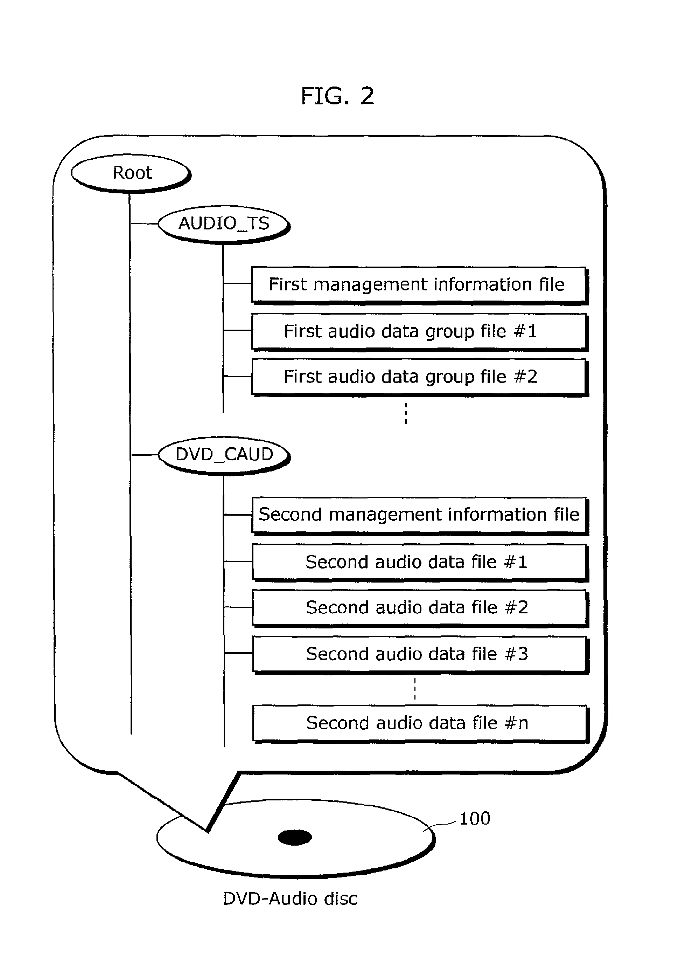

Here is a case where storage position information (address information) of the DVD Audio Zone 122 (first recording area) and storage position information (address information) of the Compressed Audio Zone 124 (second recording area) are included in the DVD Audio Disc 100. The DVD Audio Zone 122 includes the first audio data group file (#1, #2, ...) in which audio data of one or more tunes are recorded and the first management information file for managing the handling of the audio data group file. On the other hand, the Compressed Audio Zone 124 includes the second audio data file (#1, #2, ..., #n) in which audio data is recorded on a tune-by-tune basis and the second management information file in which the handling of the respective audio data is recorded. More specifically, as shown in FIG. 2, the first management information file and the first audio data group file are recorded in the AUDIO_TS directory, and the second management information file and the second audio data file are recorded in the DVD_CAUD directory.

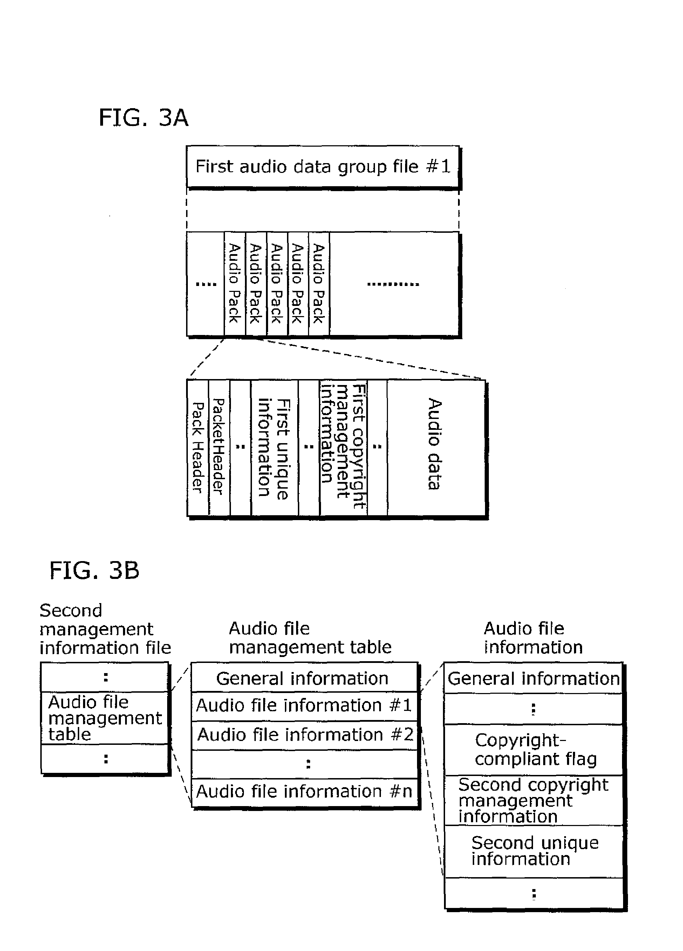

Note that the first copyright management information for managing the copyright of the audio data recorded in the first recording area (hereinafter referred to as "first audio data") is included in the file to which the corresponding first audio data is recorded. More specifically, as shown in FIG. 3, the first audio data is divided into Audio Packs corresponding to the data blocks with a predetermined byte length so as to be recorded. Further, each of the Audio Packs includes an area for recording the first unique information concerning the first audio data and the first copyright management information such as copy control information, in addition to the header part for recording playback time and the like and the part for recording the audio data.

Note that unique information is intended for uniquely identifying audio data represented by ISRC (International Standard Recording Code). Additionally, in the case where the data size of the first unique information is bigger than the data size of the area for recording unique information in an Audio Pack, the data of the first unique information is divided into several pieces and then recorded in the respectively corresponding several Audio Packs. Also, copyright management information includes copy control information and playback restriction information indicating the available number of copy times, the quality of the data to be copied (the number of channels, the sampling frequency). In addition, in the case where the data size of the first audio data is bigger than the data size of the area for recording the audio data in an Audio Pack, the first audio data is divided into several pieces so as to be recorded in several Audio Packs, and thus they are to be recorded in the Audio Packs.

On the other hand, the second copyright management information concerning the copyright of the audio data recorded in the second recording area (hereinafter referred to as "second audio data") is included in the second management information file. As shown in FIG. 3B, the second management information file includes an audio file management table. The audio file management table includes general information and the audio file information in which the information concerning each of the second audio data files is recorded (FIG. 3B shows an example one which includes the audio file information of audio file information #1 to #n).

Among the number of audio file information pieces and the audio file information included in the audio file management table, the information of the end address of the last audio file information (audio file information #n in this example) is stored in the general information of the audio file management table.

Each audio file information includes: general information; second copyright management information concerning the second audio data which is managed by means of the audio file information; the second unique information; and a copyright-compliant flag.

The general information of the audio file information includes the file name of the audio data included in the audio file information.

In the example of FIG. 3B, it is assumed that: the general information of audio file information #1 includes the file name of "the second audio data file #1" shown in FIG. 2, the general information of audio file information #2 includes the file name of "the second audio data file #2" shown in the figure, and likewise, the general information of audio file information #n includes the file name of "the second audio data file #n".

Note that each of the second audio data files may include audio data obtained by compressing and converting the first audio data of a tune (the tune corresponding to the second audio data) included in the fist audio data group file. For example, in the case where the recording scheme of the first audio data is linear PCM, the recorded second audio data file may be the audio data in a form of mp3 obtained through the compression of the first audio data in a form of linear PCM. In addition, the respective second audio data may have different audio compression recording schemes. A second audio data may be recorded in mp3, and another second audio data may be recorded in MPEG4 HE AAC, DTS, WMA, Pro, MPEG-1, 2 LayerII or ATRAC3Plus. Additionally, all the second audio data files are not necessarily obtained through the compression of the first audio data. For example, the second audio data may be recorded using the same audio coding scheme as the one used for the first audio data, but the number of channels or the sampling frequency of the second data may be different from those of the first audio data. Further, a "copyright-compliant flag" included in the second management file is intended to indicate whether the copyright restriction indicated by the second copyright management information matches the copyright restriction indicated by the first copyright management information concerning the first audio data based on which the second audio data have been generated (in other words, the copyright restrictions indicated by the same kinds of copyright management information can be managed in a unified way). For example, in the case where a content provider can manage the first copyright management information and the second copyright management information in a unified way, "1" is recorded in the copyright-compliant flag. In contrast, in the case where the first copyright management information and the second copyright management information should be managed separately, "0" is recorded. As a matter of course, "0" may be recorded in the case where the both are recorded in a unified way, and "1" may be recorded in the case where the both are recorded separately.

An information recording medium like this is used, in the case where the first audio data and the second audio data include the same music or audio contents, the details of the first copyright management information and the first unique information should be recorded also as the details of the second copyright management information and the second unique information. Additionally, "1" is recorded in the copyright-compliant flag. For example, the same copy control information and ISRC are recorded. As a result, the first audio data and the second audio data can be identified based on the same unique information, and thus the available number of copy times of the respective audio data can become the same. This mechanism will be described in detail below. Note that an information processing apparatus may be the one having both functions of a playback apparatus and a recording apparatus.

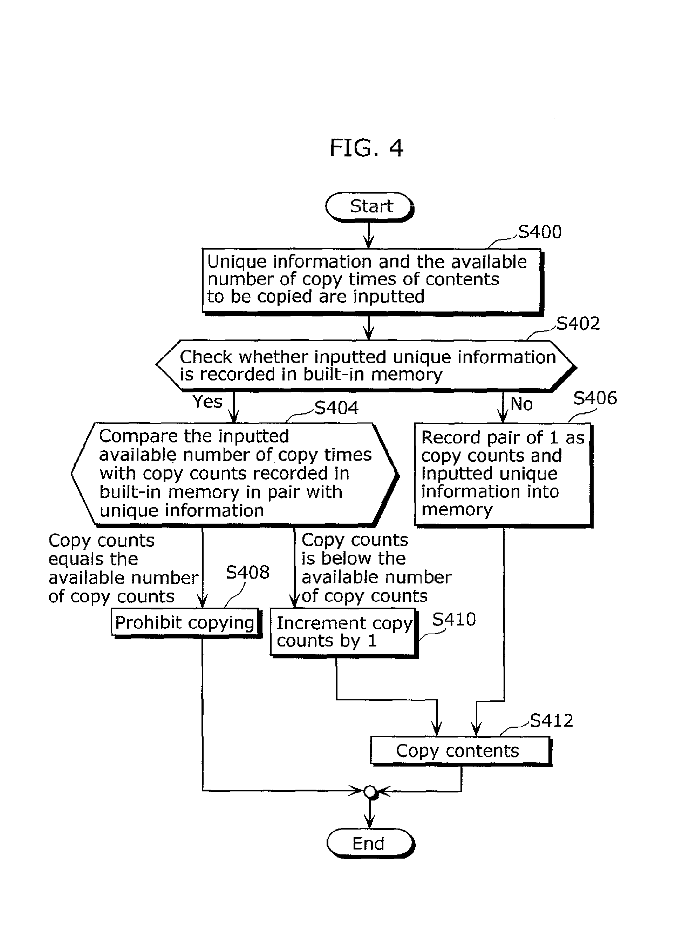

Here, how a recording apparatus mounting a built-in memory for recording and managing copyright information operates at the time of copying the contents recorded on a DVD Audio Disc 100 will be described with reference to FIG. 4. First, the available number of copy times and the content unique information which are recorded in an information recording medium are read out in a playback apparatus (such as a DVD player) first, and they are transmitted to a recording apparatus (such as a hard disk apparatus) (S400). The recording apparatus checks whether or not the inputted content unique information has already been recorded in its built-in memory (S402). In the case where a search result shows that the unique information has not yet been recorded (S402: No), the unique information and "1" which indicates the copy count are recorded in an associated manner in the built-in memory (S406) and the contents are copied (S412). However, in the case where a search result shows that the unique information has been recorded in the built-in memory (S402: Yes), the copy count recorded in pair with unique information is read out, and the read-out copy count is compared with the inputted available number of copy times (S404). In the case where the comparison result shows that the available number of copy times is bigger than the inputted available number of copy times, the copy count recorded in the built-in memory is incremented by one (S410), and the contents are copied (S412). In contrast, in the case where the comparison result shows that the available number of copy times is the same as the inputted available number of copy times, the copying of the contents is prohibited (S408).

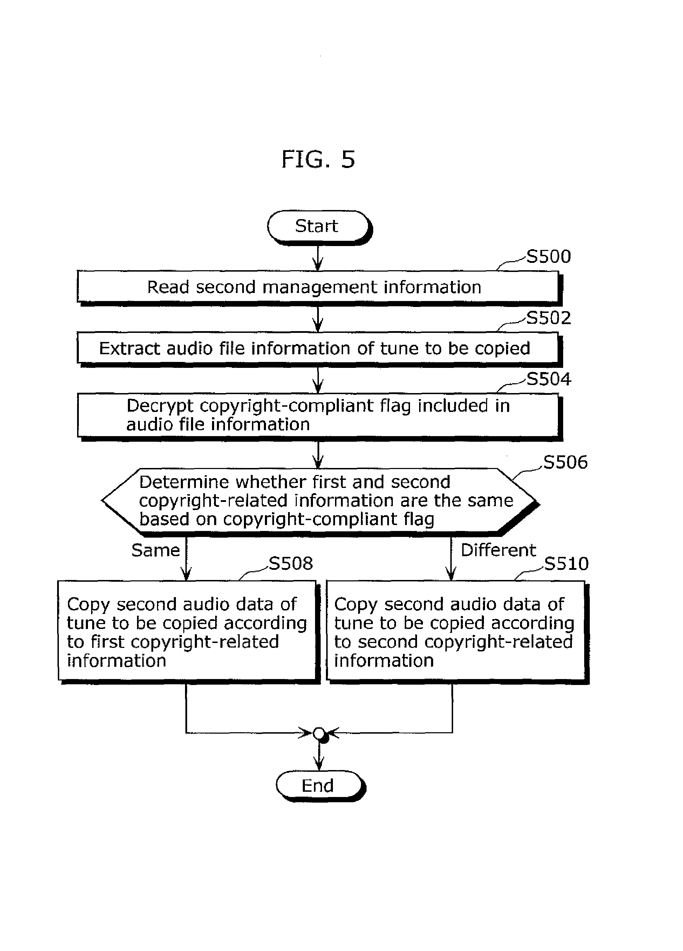

Here will be described, with reference to FIG. 5, the case where the recording apparatus like this copies tune A from the DVD Audio Disc 100 on which the first audio data and the second audio data are recorded. The contents of tune A is the same both in the first audio data and the second audio data, but the attributes vary between them. The first audio data and the second audio data are recorded in the respective first recording area and second recording area of the DVD Audio Disc 100. Here, it is assumed that the unique information concerning the respective audio data and the available number of copy times of the copyright management information are the same (twice in this case).

In this case where: the first audio data is read out by using the playback apparatus #1 which is capable of decrypting the first recording area only in order to read out the audio data; and the audio data is copied by using the recording apparatus which is capable of recording the content unique information and the copyright management information, the first audio data of tune A can be copied twice.

Likewise, in the case where: the second audio data is read out by using the playback apparatus #2 which is capable of decrypting the second recording area only; and the audio data is copied by using the recording apparatus, the second data of tune A can be copied twice.

Next, the case where: the first audio data or the second audio data are read out by using the playback apparatus #3 which is capable of decrypting both the first recording area and second recording area; and the audio data is copied by using the recording apparatus. In this case, one of the first audio data and the second audio data may be copied twice. In another case, each of the first audio data and the second audio data may be copied once, and consequently the audio data of tune A is copied twice. At this time, in the case where the first audio data is copied once firstly, "01234" indicating the unique information of the first audio data and "1" indicating the copy count are recorded in the built-in memory of the recording apparatus.

When copying the second audio data next, the built-in memory in the recording apparatus is checked. Since the same unique information "01234" as the second audio data has already been recorded, "1" is added to the copy count so that the copy count becomes "2" and the second audio data is copied once. No additional attempt to copy the first audio data or the second audio data having the same unique information is not permitted because the copy count of the unique information "01234" in the built-in memory of the recording apparatus is "2".

As the result, the available number of copy times of the audio data of tune A can be limited to twice even in the case where the playback apparatus #3 is used.

In this way, once the same unique information and copyright management information are assigned to audio data, the available number of copy times of tune A in the information recording medium can be invariable irrespective of the type of playback apparatus which is used for reading out the audio data.

However, damage on an information recording medium may alter the values of the unique information and the copyright management information resulting in the information being read out even in the case where the same unique information and copyright management information have been recorded. Different unique information or copyright management information may be mistakenly recorded in the generation process such as authoring of an information recording media. In the case where the copy procedure in FIG. 4 is executed, copyright management information such as unique information and the available number of copy times can be read out as the one different from the original information. In this case, the available number of copy times cannot be the same irrespective of the type of playback apparatus.
In order to solve this problem, the playback apparatus which is capable of decrypting the first recording area and the second recording area may perform copy control in copying the second audio data using a copyright-compliant flag.
FIG. 5 is a flow chart showing the processing executed in copying the second audio data using the copyright-compliant flag.

More specifically, the playback apparatus reads out the following in sequence: the second management information file recorded in the second recording area of the DVD Audio disc 100 (S500); the audio file information corresponding to the tune to be copied (S502); and the copyright-compliant flag included in the audio file information (S506). In the case where the read out copyright-compliant flag is "1" (the first copyright management information and the second copyright management information have the same copyright restrictions) (S506: the same), copy control is performed according to the first unique information and the first copyright management information concerning the first audio data based on which the second audio data has been generated (S508). In the case where the read out copyright-compliant flag is "0" (the first copyright management information and the second copyright management information are managed separately) (S506: different), copy control is performed according to the second unique information and the second copyright management information (S510). This consequently eliminates the problem that the second unique information and the second copyright management information is mistakenly read out resulting in causing differences in the available number of copy times.

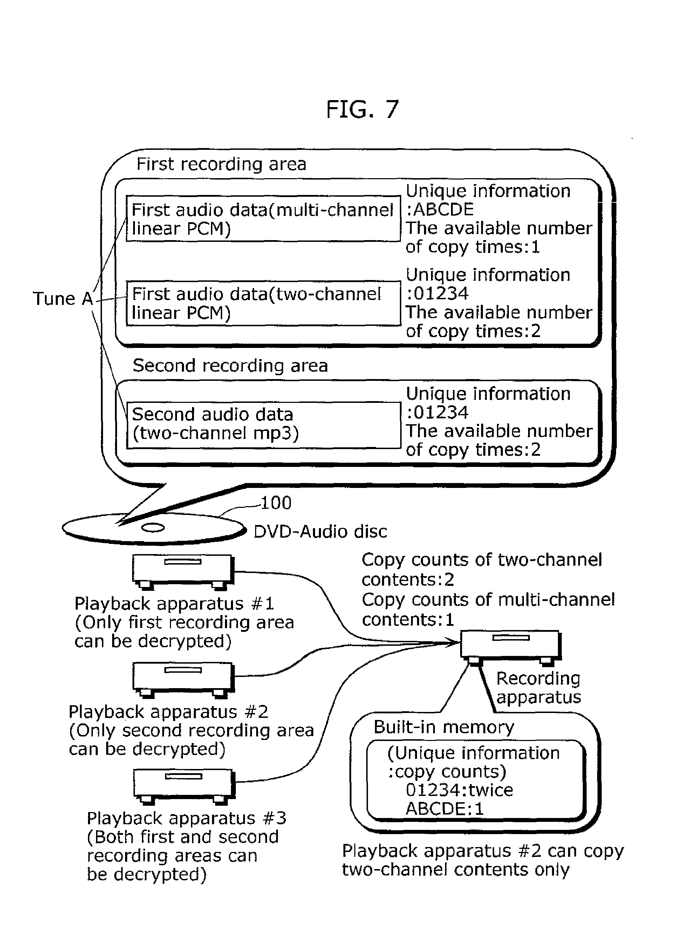

On the other hand, plural audio data of the same tune with different attributes may be recorded as the first audio data. For example, as shown in FIG. 7, the two-channel audio data of a tune and the multi-channel audio data of the same tune may be recorded in the first recording area. However, the number of channels varies between the audio data, and thus they are generally displayed to a user as different contents. Therefore, in many cases, the unique information and the copyright management information vary between these audio data. At this time, in the case where compressed audio data of the same tune is recorded as the second audio data, the first unique information and the first copyright management information concerning one of the first audio data are recorded also as the second unique information and the second copyright management information according to a judgmental standard. Here will be described an example case where the judgment standard is "the number of channels". When the second audio data is two-channel audio data, the unique information and the copyright management information of the first two-channel audio data are recorded. In contrast, when the second audio data is multi-channel audio data, the unique information and the copyright management information of the first multi-channel audio data are recorded. As shown in FIG. 7, it is assumed that: the first audio data in a form of two-channel linear PCM and the first audio data in a form of multi-channel linear PCM are respectively recorded in the first recording area as the audio data of the same tune; and that the second audio data in a form of two-channel mp3 of the tune is recorded in the second recording area. At this time, the first unique information and the first copyright management information concerning the first two-channel audio data are recorded as the second unique information and the second copyright management information concerning the second two-channel audio data. On the other hand, the information different from the two-channel audio data is recorded in the unique information and the copyright management information of the first multi-channel audio data.

In the case where two-channel audio data of tune A is copied from the information recording medium like this, the first audio data is read out by using the playback apparatus #1 which is capable of decrypting the first recording area only, and the audio data is copied by using a recording apparatus which is capable of recording the content unique information and the copyright management information. In this way the first two-channel audio data can be copied twice. Likewise, in the case where the second audio data is read out by using the playback apparatus #2 which is capable of decrypting the second recording area only and the read-out data is copied by using the recording apparatus, the second audio data can be copied twice. Here is another case where audio data is read out by using the playback apparatus #3 which is capable of decrypting both of the first recording area and second recording area and the read-out audio data is copied by using the recording apparatus. First, the first two-channel audio data can be read out by using the playback apparatus #3 and the read out data is copied by using the recording apparatus once. Next, the second audio data is read out and copied once by the recording apparatus. At this time, the second unique information becomes the same as the first unique information concerning the two-channel audio data and the copy count becomes "2". Therefore, no additional copying is permitted. As the result, the available number of copy times concerning the two-channel audio data of tune A becomes twice. As a matter of course, it is possible to read out the first two-channel audio data by using playback apparatus #3 and copy the data twice by using the recording apparatus. It is also possible to read out the second audio data and copy the data twice by using the recording apparatus. In any case where the playback apparatus #3 is used, the available number of copy times of the two-channel audio data of tune A is twice. Accordingly, the available number of copy times of the two-channel audio data can be invariable irrespective of the type of playback apparatus for reading out the audio data.

On the other hand, in the case of copying the multi-channel audio data of tune A, the available number of copy times is invariable, even in the case where the first multi-channel audio data is read out by using one of the playback apparatus #1 and the playback apparatus #3 which are capable of decrypting the first recording area, and then the data is copied by a recording apparatus.

In this way, it becomes possible to make the number of copy times of contents invariable as long as one of such playback apparatuses that are capable of decrypting the recording area including the contents of two-channel audio data is used, and in the case where the contents read out by the playback apparatus is copied by a recording apparatus. Likewise, it becomes possible to make the number of copy times of contents invariable as long as one of such playback apparatuses that are capable of decrypting the recording area including the contents of multi-channel audio data is used, and in the case where the contents read out by the playback apparatus is copied by a recording apparatus.

In the above description, the number of channels is used as a judgmental standard for identifying the audio data which has the same unique information and copyright management information, and the same unique information and copyright management information are recorded on the audio data with the same number of channels. However, it should be noted that this judgmental standard may be other standards such as the number of quantization bits and a sampling frequency.

In addition, in the case of expecting that the audio data of two-channel "linear PCM", the audio data of two-channel "mp3" and the audio data of multi-channel "linear PCM" are handled as if they are the same contents, it is required that each of the audio data has the same unique information and copyright management information. As long as the requirement is satisfied, the available number of copy times of the audio data of the same tune becomes certainly invariable, irrespective of the number of channels and the playback apparatus to be used.

Also, in the case where the second management information includes the information indicating the link relationship between the first audio data and the second audio data, the first audio data and the second audio data which have the same unique information and copyright management information are in a link relationship.

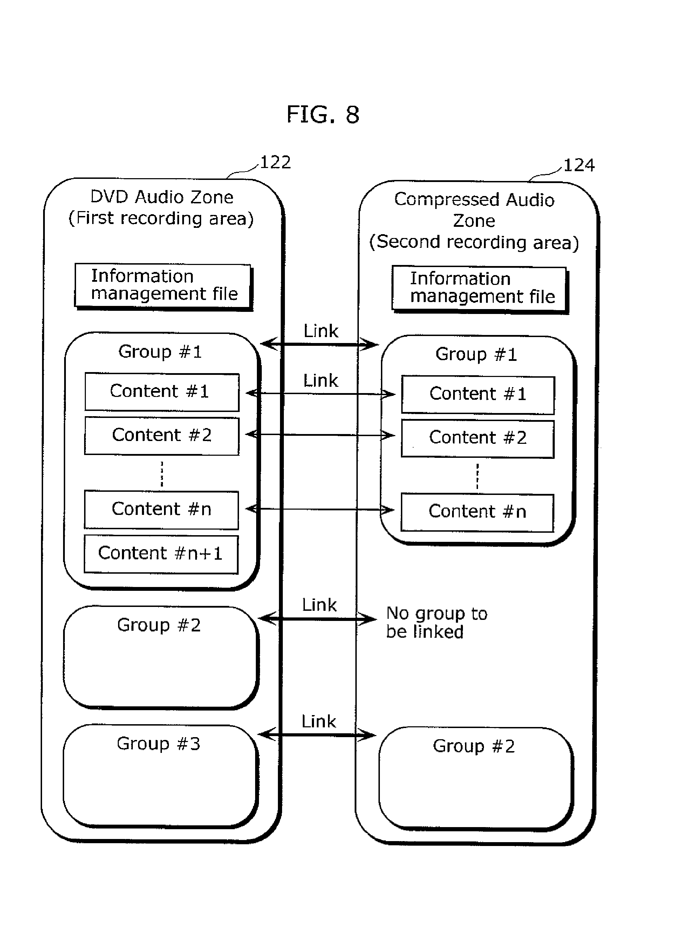

First, the way the contents in the DVD Audio Zone 122 and the contents in the Compressed Audio Zone 124 are recorded and the link relationship between the contents will be described with reference to FIG. 8. As shown in FIG. 8, there is a concept called "group" including one or more contents, and one or more "groups" are recorded in the DVD Audio Zone 122 (first recording area). One or more "groups" are recorded also in the Compressed Audio Zone 124 (second recording area). In addition, the groups in the first recording area are in a link relationship with corresponding groups in the second recording area, and the contents included in the groups of the first recording area are in a link relationship with corresponding contents included in the groups of the second recording area. Note that there may be such a group in the first recording area that is not linked to a group in the second recording area. Likewise, there may be such a group in the second recording area that is not linked to a group in the first recording area.

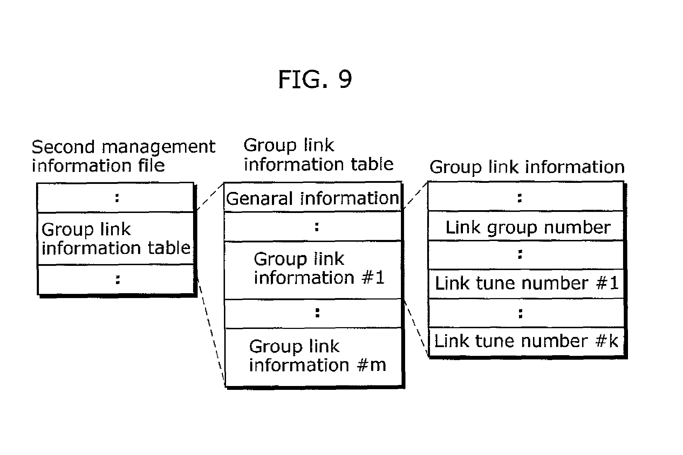

Details of the management information (second management information) to be recorded in the Compressed Audio Zone 124 will be described with reference to FIG. 9. The second management information file includes a group link information table for recording the information indicating the link relationship between the groups in the first recording area and the groups in the second recording area. The group link information table includes the group link information relating to the groups and contents in the second recording area which are linked to the respective groups in the first recording area. For example, the information relating to the group and contents in the second recording area which are linked to the first group recorded in the first recording area are recorded in the group link information #1. Group link information includes a link group number and a link tune number. As the link group number, the number of the group in the second recording area which is linked to the group in the first recording area managed by the group information is recorded. For example, as the link group number of the group link information #1, the group number in the second recording area which is linked to the first group in the first recording area is recorded. Further, the link tune number corresponds to all of the contents included in the group of the first recording area. Among the contents included in the group, of the second recording area, identified by the link group number, the link tune number of the contents linked to the respective contents in the first recording area is recorded in the second recording area. Here is an example case where "3" is recorded as the link group number of the group link information #1, and "4" is recorded in the link tune number #1. This indicates that the tune of the Compressed Audio Zone 124 which is linked to the first tune of the first group of the DVD Audio Zone 122 is the forth tune of the third group in the Compressed Audio zone 124.

The contents in the first recording area and the contents in the second recording area which are linked to each other by the link information have the same unique information and copyright management information of the first audio data and second audio data. Note that "1" is recorded in the copyright-compliant flag in this case (the second copyright management information has the same copyright restriction shown by the first copyright management information). In addition, in the case where several contents in the first recording area are linked to contents in the second recording area, the unique information and copyright management information of the second audio data corresponding to the contents in the second recording area become the same as the unique information and copyright management information of the first audio data corresponding to one of the contents, based on a judgmental standard. Such a judgmental standard may be other judgmental standards. For example, in the case of using the number of channels, such first audio data that has the same number of channels as that of the second audio data may be selected. As a matter of course, the respectively corresponding audio data may have different unique information and copyright management information even in the case where they are linked by link group information.

Here is a case where a playback apparatus outputs the second audio data for copying. In the case where: the copyright-compliant flag included in the second management information is decrypted; and it is found that the copyright-compliant flag is "1" (the same copyright restrictions are shown by the first and second copyright management information), the playback apparatus may decrypt the link information, identify the first audio data which is linked to the second audio data and perform copy control based on the first copyright management information and the first unique information. In addition, the data to be used in the present invention is not limited to audio data, and other data such as video data, still image data and text data may be used separately or in combination.

According to the present invention, the same unique information and copyright management information are included in the respective audio data in the case where the same tune with a different attribute such as recording scheme is recorded in each of the audio data. Therefore, it is possible to provide the information recording media which makes the available number of copy times of the tune invariable irrespective of the playback apparatus to be used, and thus it becomes possible to prevent causing confusion among users.

### (Second Embodiment)

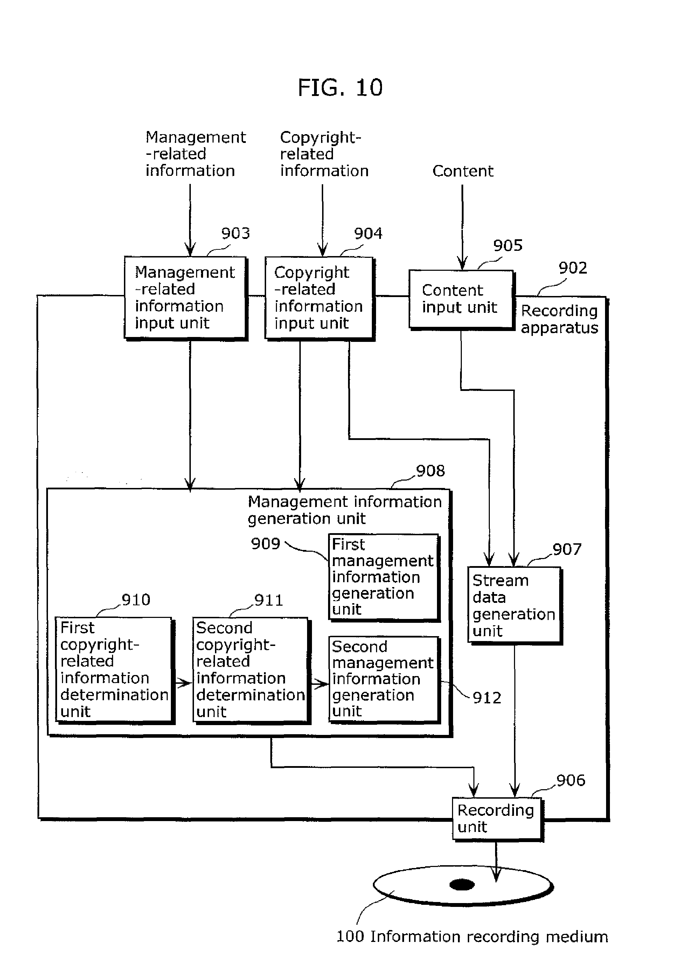

The invention concerning this embodiment is a recording apparatus which records management information, audio data and copyright management information on the respectively divided several recording areas of the information recording media. The recording apparatus is primarily useful in the application to package media for commercial use in an authoring system. FIG. 10 is a block diagram showing the functional structure of the recording apparatus 902 concerning this embodiment. The recording apparatus 902 includes: a management-related information input unit 903; a copyright-related information input unit 904; a content input unit 905; a recording unit 906; a stream data generation unit 907; and a management information generation unit 908. The management information generation unit 908 includes: a first management information generation unit 909; a first copyright-related information recording unit 910; a second copyright-related determination unit 911; and second management information generation unit 912.

Like the case of FIG. 1, the recording apparatus 902 records management information, audio data and copyright management information on the respectively divided several recording areas of the information recording media. These recording areas are DVD Audio Zone 122 which is the first recording area and Compressed Zone 124 which is the second recording area. Note that, as shown in FIG. 3, copyright-related information such as content unique information and copyright management information are recorded in each Audio Pack on which audio data is recorded in the DVD Audio Zone 122, but the same is recorded in the second management information in the Compressed Audio Zone 124.

In the case of recording the information to be recorded in the first recording area into the information recording medium 100, the recording apparatus 902 outputs first audio data to the stream data generation unit 907 after the first audio data has been inputted to the content input unit 905. In addition, after the first copyright-related information concerning the first audio data is inputted to the copyright-related information input unit 904, the recording apparatus 902 outputs the inputted copyright-related information to the stream data generation unit 907 and the management information generation unit 908. Note that "copyright-related information" includes unique information for uniquely identifying audio data and copyright management information such as copy control of audio data.

The stream data generation unit 907 divides the audio data into Audio Packs as shown in FIG. 3 using the inputted first audio data and first copyright-related information and records copyright-related information into each of the Audio Packs. In this way, the stream data generation unit 907 converts the format of the data into stream data format which can be recorded in the first recording area. Further, the stream data generation unit 907 outputs the conversion result to the recording unit 906 and records it in the information recording medium 901. In addition, the first copyright-related information outputted to the management information generation unit 908 is recorded in the first copyright-related information recording unit 910. In the case of recording audio data in compliance to DVD audio, the first audio data needs to be recorded after being divided into Audio Packs as described above. However, it should be noted that audio data is not necessarily divided and recorded in the respective Audio Packs in the case of recording the audio data in a recording standard other than DVD Audio, and instead, the audio data may be recorded by converting the format of the data into the format defined in each recording standard.

In addition, when the first management-related information for managing the handling of the first audio data is inputted through the management-related information input unit 903, the inputted first management-related information is outputted to the management information generation unit 908. Note that the first management-related information includes the following information concerning the contents and groups to be inputted by a manufacturer: the number of groups, the number of tunes included in each of the groups, group names and tune names. The management information generation unit 908 converts the data structure of the inputted first management-related information into the data structure of the management information to be recorded in the first recording area by the first management information generation unit 909. The conversion result is outputted to the recording unit 906 and recorded in the information recording medium 901. Note that the number of groups and the number of tunes included in each of the groups which are to be recorded in the first management information are recorded in the second management information generation unit because they are used at the time of generating the group link information table of the second management information.

Here is another case of recording the information to be recorded in the second recording area into the information recording medium 100. When the second audio data is inputted in the content input unit 905, the audio data is outputted to the stream data generation unit 907. The stream data generation unit 907 converts the format of the inputted second audio data into the audio data format which is compliant to the second recording area, outputs the conversion result to the recording unit 906 and records it on the information recording medium 901.

In addition, when the second copyright-related information concerning the second audio data is inputted into the copyright-related information input unit 904, the second copyright-related information is outputted to the management information generation unit 908. Further, the second management-related information for managing the handling of the second audio data is inputted to the management-related information input unit 903 and outputted to the management information generation unit 908. Note that the second management-related information includes information of the contents and groups to be inputted by a manufacturer and the link relationship between the contents in the first recording area and the contents in the second recording area.

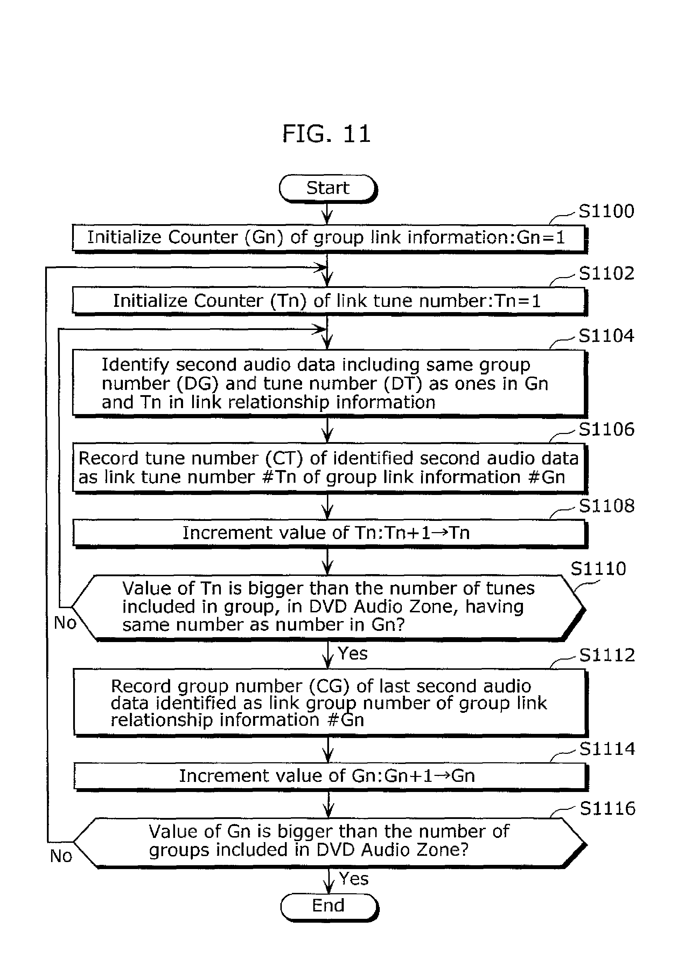

The link relationship information is assigned to the respective second audio data to be recorded in the information recording medium 100. The link relationship information shows (a) the group number (DG) of the first audio data which is the same tune or the first audio data based on which the second audio data is generated and (b) the tune number (DT) used for the group. Based on the link relationship information, the group link information table like shown in FIG. 9 is generated. The recording processing of the group link information will be described with reference to FIG. 11. Note that, in FIG. 11, "CG" indicates the number of the group including the second audio data in the Compressed Audio Zone 124, and "CT" indicates the number of the tune of the second audio data in the group having a group number of CG. In addition, "Gn" means the counter of the group link information, and "Tn" means the counter of the link tune number.

In the case of recording group link information table, as shown in FIG. 11, Gn and Tn are initialized first, "1" is set in Gn, (S1100) and "1" is set in Tn (S1102). Next, the second audio data, which includes the same group number (DG) and tune number (DT) as the ones in Gn and Tn, is identified in the link relationship information (S1104).

Further, the tune number (CT) assigned to the identified second audio data is extracted, and the tune number (CT) is recorded in the link tune number #Tn of the group link information #Gn (S1106). In the case where there is no second audio data to which the same group number (DG) and tune number (DT) as the ones which are set in Gn and Tn are assigned, it should be noted that "0" is recorded as the link tune number #Tn. The above-described processing is performed on all of the link tune in the group link information #Gn (S1104 to S1110). In other words, the processing is performed on all of the tunes included in the group, in the DVD Audio Zone 122, having the same number as the number in Gn.

After that, the group number (CG) which is assigned to the second audio data identified as the last data in the processing is recorded as the link group number in the group link information #Gn (S1112). In the case where "0" is recorded as all of the link tune numbers of the group link information #Gn, it should be noted that "0" is recorded as the link group number. This processing is performed on all of the groups included in the DVD Audio Zone 122 (S1102 to S1116).

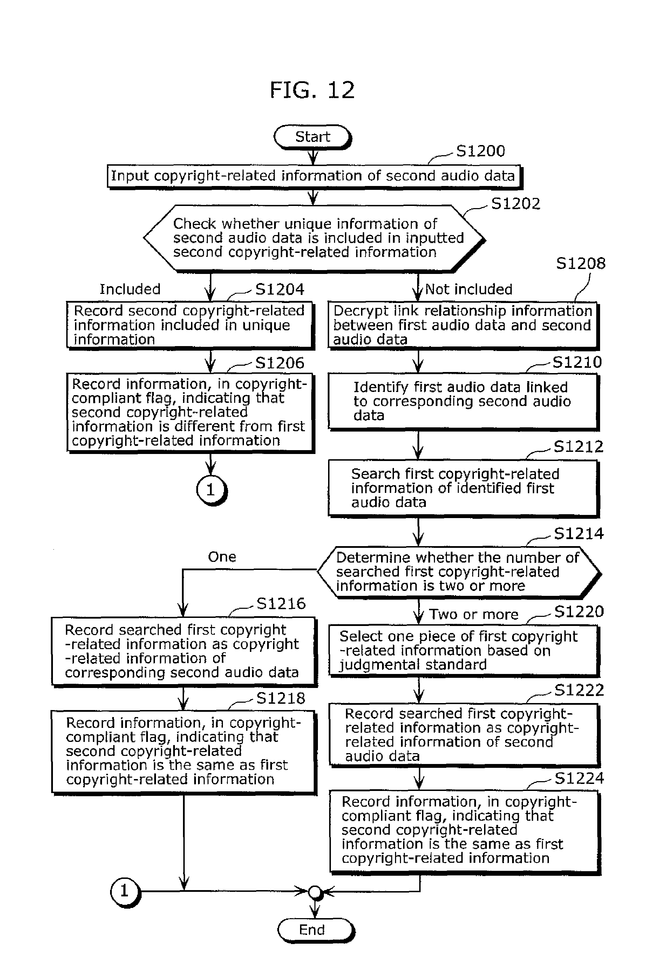

The management information generation unit 908 determines the copyright-related information concerning each of the second audio data using its second copyright-related information determination unit 911. The copyright-related information includes the unique information and copyright management information of audio data. As shown in the flow chart of FIG. 12, in the case where the copyright-related information concerning the second audio data is inputted by a manufacturer (S1200) and the inputted copyright-related information includes the unique information of the second data (S1202: included), the second copyright-related information determination unit 911 records the inputted second copyright-related information on an information recording medium (S1204), and outputs the second copyright-related information to the second management information generation unit 912. Additionally, the information indicating that the second copyright management information is different from the first copyright management information, is recorded in the copyright-compliant flag of this case (S1206).

However, as the copyright-related information of the second audio data which cannot be identified based on the unique information of the second copyright-related information inputted by a manufacturer (S1202: not included), the second copyright-related information determination unit 911 applies one of the first copyright-related information recorded in the first copyright-related information recording unit 910. More specifically, the second copyright-related information determination unit 911 decrypts the link relationship information inputted by the management information generation unit 908 (S1208), and identifies the first audio data linked to the second audio data (S1210). Further, the second copyright-related information determination unit 911 searches the first copyright-related information recording unit 910 for the first copyright-related information of the identified first audio data (S1212), and determines whether or not the searched first copyright-related information is one (S1214).

In the case where the searched first copyright-related information is one (S1214: one), the second copyright-related information determination unit 911 outputs the second copyright-related information of the second audio data to the second management information generation unit 912. In the case where the result of decrypting the link information shows that the second audio data is linked to several first audio data, the second copyright-related information determination unit 911 is to select the first copyright-related information of one of the first audio data based on a certain judgmental standard. Such a judgmental standard is, for example, the number of channels. In this example, the copyright-related information of the first audio data with the same number of channels as the number of channels of the second audio data may be selected. Additionally, the second management information generation unit 912 generates the second management information in compliant to the data structure of the management information to be recorded in the second recording area based on the inputted second management-related information and second copyright-related information. Note that the information indicating that the second copyright management information is the same as the first copyright management information is recorded in the copyright-compliant flag of this case (S1218). The second management information generated in this way is outputted to the recording unit 906 and recorded on the information recording medium 901.

In the case where no second copyright-related information is inputted by a manufacturer, the same unique information and copyright-related information as the information of the first audio data which is a link destination are to be assigned as the unique information and copyright-related information of the second audio data. For example, the same ISRC and the available number of copy times are assigned. Accordingly, even in the case where the audio data is read out using various kinds of apparatuses and copied by a recording apparatus, the available number of times of copying the linked audio data from the recording medium is invariable. In other words, the available number of copy times of the audio data indicating the same linked contents can be invariable irrespective of the types of the playback apparatuses. Such types of playback apparatuses are: an apparatus which is capable of decrypting the first recording area only; an apparatus which is capable of decrypting the second recording area only; and an apparatus which is capable of decrypting both the first and second recording areas.

Here will be described the case where the second copyright management information has been inputted by a manufacturer. In the present invention, the information indicating that the second copyright management information is the same as the first copyright management information is recorded in a copyright-compliant flag as long as the information is the same as the first copyright management information of the first audio data which is linked by the link relationship information. Additionally, the data to be used in the present invention is not limited to audio data, and it is possible to use other kinds of data such as video data, still image data and text data separately or in combination.

The present invention makes it possible to record several audio data of the same tune with different attributes, and further, to create the information recording medium which is capable of making the available number of copy times invariable irrespective of the type of playback apparatus.

### (Third Embodiment)

The present invention relates to a playback apparatus which is capable of playing back or reading out, so as to output, the audio data recorded in both the first and second recording areas of an information recording medium, in the case where: the first recording area includes the first audio data, the first management information and the first copyright-related information; and the second recording area includes the second audio data, the second management information and the second copyright-related information. The first audio data and the second audio data have the same tune, but the attributes of the data such as coding formats vary depending on the data. Also, the copyright-related information concerning the fist audio data is recorded in the file including the first audio data, and the copyright-related information concerning the second audio data is recorded in the file which includes the second management information. Note that the copyright-related information includes the unique information for identifying audio data and the copyright management information such as the available number of copy times.

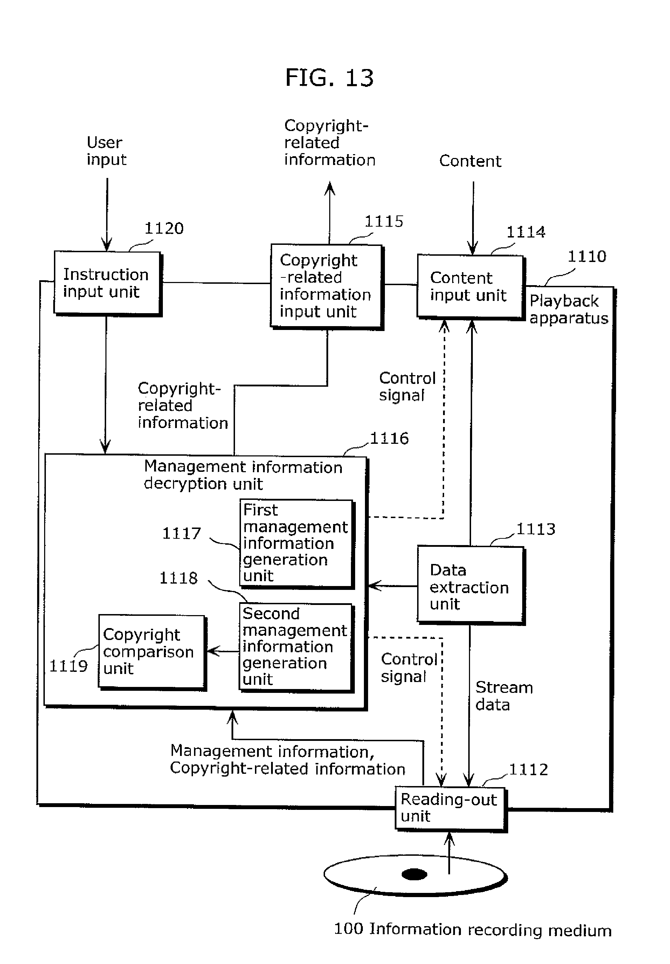

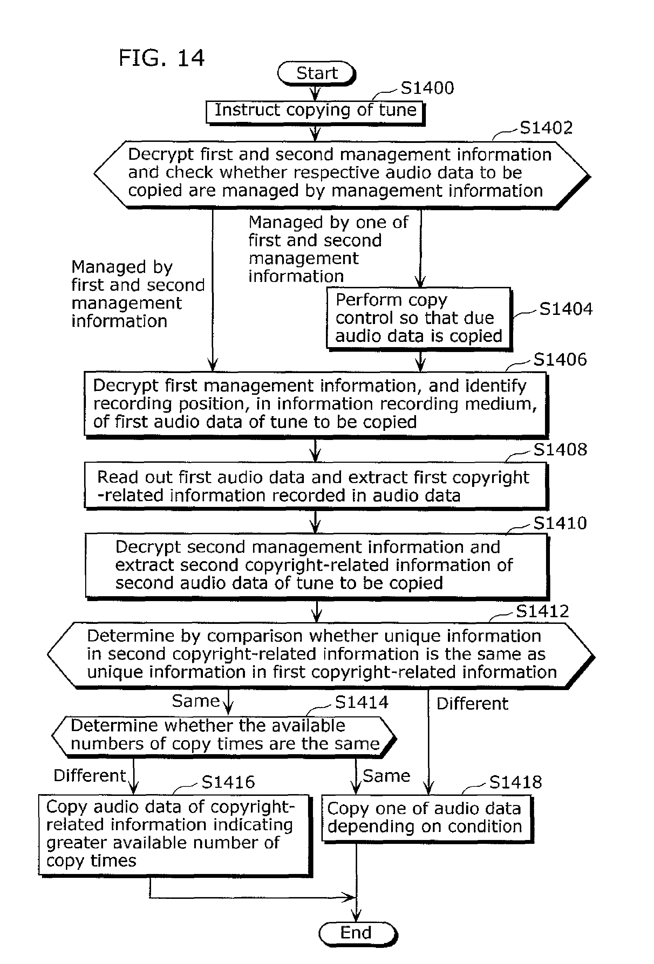

FIG. 13 is a diagram showing a playback apparatus concerning the present invention. FIG. 14 is a flow chart indicating the flow of the processing performed by the playback apparatus. The playback apparatus 1110 includes: a reading-out unit 1112; a data extraction unit 1113; a content output unit 1114; a copyright-related information output unit 1115; a management information decryption unit 1116; a first management information decryption unit 1117; a second management information decryption unit 1118; and a copyright comparison unit 1119. Additionally, the management information decryption unit 1116 includes: a first management information decryption unit 1117; a second management information decryption unit 1118; a copyright comparison unit 1119; and an instruction input unit 1120.

The processing of how the playback apparatus 1110 reads out the audio data for copying will be described. When an information recording medium 1111 is inserted into the playback apparatus 1110, the file including the first management information and the file including the second management information are read out in the reading-out unit 1112, and these read-out files are outputted to the management information decryption unit 1116. When an instruction of copying a tune is inputted through the instruction input unit 1120 (S1400), the management information decryption unit 1116 decrypts the first management information and the second management information using the respectively corresponding first management information decryption unit 1117 and second management information decryption unit 1118, and determines whether the audio data corresponding to the identified tunes are managed by the management information (S1402). In the case where the result shows that the audio data is managed by one of the first management information and the second management information (S1402: managed by first or second management information), the audio data and the copyright-related information are outputted for copying (S1404).

On the other hand, in the case where the result shows that both of the first and second management information manage the audio data (S1402: managed by first and second management information), the first management information is decrypted and the recording position of the first audio data corresponding to the tune to be copied is decrypted (S1406). The audio data is read out by the reading-out unit 1112 based on the decryption result, and outputted to the data extraction unit 1113. The data extraction unit 1113 reads out the first copyright-related information recorded in the audio data and outputs the information to the copyright comparison unit 1119 (S1408).

In addition, the management information decryption unit 1116 decrypts the second management information, reads out the second copyright-related information concerning the second audio data, and outputs the copyright comparison unit 1119 (S1410). The copyright comparison unit 1119 determines whether or not the unique information included in the second copyright-related information is the same as the unique information included in the first copyright-related information (S1412). In the case where the result shows that they are the same (S1412: same), the management information decryption unit 1116 selects one of the first copyright-related information and the second copyright-related information according to a certain condition, and outputs the copyright-related information and the audio data.

For example, the management information decryption unit 1116 compares the available number of copy times included in each of the copyright-related information (S1414), selects the copyright-related information indicating a greater available number of copy times, and outputs copyright-related information and the audio data to be copied (S1416). More specifically, it outputs the unique information included in the selected copyright-related information and the available number of copy times using the copyright-related information output unit 1115. After that it checks whether or not the audio data has already been copied by a recording apparatus and, in the case where it has been copied, it checks whether or not the copy count has already amounted to the available number of copy times. In addition, it reads out the audio data using the reading-out unit 1112, extracts only contents data using the data extraction unit 1113, and outputs the data using the content output unit 1114.

Here, in the case where the unique information is the same, it controls the process so that the audio data with a greater available number of copy times is copied. However, in the case where an act or a rule for copyright management or the like places a restriction that a smaller number of copy times should be selected, data should be copied according to the act or rule.

In addition, in the case where: the audio data of the tune to be copied is managed in the respective first management information and second management information; and the information indicating that the second copyright management information is the same as the first copyright management information is recorded in the copyright-compliant flag included in the second management information, copy control may be performed based on the first copyright management information and the first unique information at the time of copying the second audio data.

On the other hand, in the case where: the unique information included in the second copyright-related information is different from the unique information included in the first copyright-related information (S1412: different); or both of the unique information and the available number of copy times of the second copyright-related information are the same as those of the first copyright-related information (S1414: same), the audio data corresponding to one of the first copyright-related information and the second copyright-related information is to be copied (S1418). The condition mentioned here is not limited. For example, audio data with a high compression rate is selected in the case where high-speed copying is desired, or non-compressed audio data or audio data with a low compression rate is selected in the case where high-quality data is desired.

In this way, both of the first audio data and the second audio data are copied according to the respective first copyright management information and second copyright management information. This enables prevent copying of the tune exceeding the total available number of copy times which is indicated by each copyright management information. This results in prohibiting a playback apparatus which is capable of outputting both the first audio data and the second audio data from copying the data more frequently than an apparatus which is capable of outputting only one of the first and second data. Thus, the available number of copy times can be invariable irrespective of the type of playback apparatus.

Note that the present invention can also be applicable for an information recording medium on which (a) audio data of the same tune with different attributes are recorded in the three or more recording areas and (b) copyright-related information is recorded with respect to each audio data. Here is an additional case of not only copying but also playing back a tune. In the case where playback restriction information is included in the copyright-related information, it is possible to compare playback restriction information assigned to each audio data, select the audio data to which the playback restriction information which is preferable for a user is assigned and play back the audio data. Here is an example case where several audio data are recorded and each of the audio data has the same tune but the available number of copy times assigned to each of the audio data is different. In this case, the audio data having a greater available number of copy times is selected and played back. Also, it is assumed that audio data is used as recording information in the present invention, but still image data, video data, text data and the like may be used instead.

In addition, the present invention may be an information processing apparatus which has the above-described functions of a playback apparatus and a recording apparatus concurrently.

In the case where: several audio data of the same tune with different attributes are recorded in the correspondingly respective recording areas in an information recording medium; and the audio data are copied from the information recording medium, the present invention makes it possible to read out the audio data to which a greater available number of copy times is assigned so as to perform copying of the data. Therefore, it becomes possible to provide a playback apparatus which provides a handicap to a user.

### Industrial Applicability

The information recording medium concerning the present invention provides an effect of making the available number of copy times of the same contents invariable irrespective of the function of a playback apparatus. Thus, the present invention is applicable to a recording medium such as a CD disc, a DVD disc, a Blueray disc, a semiconductor memory and a hard disc.
In addition, the recording apparatus concerning the present invention has the function for generating an information recording medium which provides an effect of making the available number of copy times of the same contents invariable. Thus, the present invention is applicable to a CD disc, a DVD disc, a Blueray disc, a semiconductor memory, an authoring system or a recording apparatus. Further, the playback apparatus concerning the present invention has an effect of automatically selecting the audio data to which a greater available number of copy times is assigned, in the case of reading out the audio data to be copied from the information recording medium on which several audio data of the same tune with different attributes are recorded. Thus, the present invention is applicable to a playback apparatus which plays back a CD disc, a DVD disc, a Blueray disc, a semiconductor memory and a hard disc.

## Claims

1. An information recording medium having a first recording area and a second recording area,
wherein, the followings are recorded in the first recording area: first content information; first management information concerning handling of the first content information; and first copyright-related information for placing a copyright restriction on the first content information, and
the followings are recorded in the second recording area: second content information; and second management information including second copyright-related information for placing a copyright restriction on the second content information,
the respective first content information and second content information are the same in contents but different in attributes,
the second management information includes: link information indicating a relationship between the first content information and the second content information; and a copyright-compliant flag, and
the copyright-compliant flag indicates whether or not the copyright restriction indicated by the second copyright-related information matches the copyright restriction indicated by the first copyright-related information of the first content information which is linked to the second content information by the link information.

2. The information recording medium according to Claim 1,
wherein management information for managing the information recording medium is included in an inner peripheral portion of the recording medium, and
the management information includes first position information indicating a storage position of the first management information and second position information indicating a storage position of the second management information.

3. The information recording medium according to Claim 1,
wherein the second content information is compressed content information.

4. The information recording medium according to Claim 1,
wherein the first content information is stored in a predetermined area in a data block having a predetermined byte length.

5. The information recording medium according to Claim 4,
wherein, in the case where a data size of the first content information is bigger than a size of a predetermined area in the data block, the first content information is stored throughout plural data blocks.

6. The information recording medium according to Claim 5,
wherein the data blocks include an area for storing first copyright-related information corresponding to the first content information.

7. The information recording medium according to Claim 1,
wherein the second management information is included in a management file for managing second content information of the second recording area,
the following is stored in the management file: a name of a file which stores the second content information of the second recording medium; second copyright-related information of the second content information corresponding to the file name; and a copyright-compliant flag.

8. The information recording apparatus according to Claim 1,
wherein the respective first content information and second content information are the same in contents but different in the number of channels.

9. The information recording medium according to Claim 1,
wherein the respective first content information and second content information are the same in contents but different in sampling frequencies.

10. The information recording medium according to Claim 1,
wherein content information is audio data.

11. The information recording medium according to Claim 1,
wherein a copyright restriction on the first content information is a restriction on the available number of copy times of the first content information, and
a copyright restriction on the second content information is a restriction on the available number of copy times of the second content information.

12. An information processing apparatus for recording or playing back an information recording medium having a first recording area and a second recording area,
wherein, the followings are recorded in the first recording area: first content information; first management information concerning handling of the first content information; and first copyright-related information for placing a copyright restriction on the first content information, and
the followings are recorded in the second recording area: second content information; and second management information including second copyright-related information for placing a copyright restriction on the second content information,
the respective first content information and second content information are the same in contents but different in attributes,
the second management information includes: link information indicating a relationship between the first content information and the second content information; and a copyright-compliant flag, and
the copyright-compliant flag indicates whether or not (a) a copyright restriction indicated by the second copyright-related information matches (b) a copyright restriction indicated by the first copyright-related information of the first content information which is linked to the second content information by the link information,
wherein said information processing apparatus comprises:
a reading-out unit operable to read out information of the information recording medium; and
an information processing unit operable to process the information read out by said reading-out unit,
said information processing unit is operable to output the second content information according to first copyright-related information, in the case where the copyright-compliant flag indicates that (a) recording and playback restrictions indicated by the second copyright-related information match (b) recording and playback restrictions indicated by the first copyright-related information of the first content information which is linked to the second content information by the link information.

13. The information recording apparatus according to Claim 12,
wherein the first copyright-related information and the second copyright-related information include information for restricting an available number of copy times of the respectively corresponding first content information and second content information,
said information processing unit includes a copy unit operable to copy the read one of first content information and second content information,
said information processing apparatus further comprises
a memory unit operable to hold a copy count of the read one of first content information and second content information recorded in the information recording medium,
the copy count in said memory unit is incremented by 1, each time one of the first content information and the second content information is copied by said copy unit, and
copying of the first content information and the second content information is prohibited after the copy count recorded in said recording unit amounts to the available number of copy times indicated by the first copyright-related information.
